# EUROPEAN PATENT SPECIFICATION

(11) **EP 3 072 302 B1**
(45) Date of publication and mention of the grant of the patent: **05.06.2019**
(21) Application number: 13817753.0
(22) Date of filing: 20.11.2013
(51) Int. Cl.: H04N 21/2343, H04N 21/845, H04L 29/06

(54) **A METHOD, NODE AND COMPUTER PROGRAME FOR PROVIDING LIVE CONTENT STREAMING.**
EIN VERFAHREN, KNOTEN-UND COMPUTER-PROGRAMM FÜR DIE BEREITSTELLUNG VON STREAMING VON LIVE-INHALTEN
UNE MÉTHODE, NOEUD, ET PROGRAMME D' ORDINATEUR POUR FOURNIR LE STREAMING DE CONTENU EN DIRECT

(43) Date of publication of application: 28.09.2016
(73) Proprietor: Telefonaktiebolaget LM Ericsson (publ), 164 83 Stockholm (SE)
(72) Inventor: SLSSINGAR, Michael John, S-127 46 Skärholmen (SE); LOHMAR, Thorsten, 52074 Aachen (DE)
(74) Representative: Zacco Sweden AB
(86) International application number: PCT/SE2013/051370
(87) International publication number: WO 2015/076713

(56) References cited:
- WO-A1-2013/017165
- US-A1- 2011 082 924

## Description

### TECHNICAL FIELD

The invention relates to a method, multimedia streaming service node, computer program and computer program product for providing live content.

### BACKGROUND

3GPP and ISO (International Organization for Standardization) have defined MPEG (Moving Picture Experts Group) DASH (Dynamic Adaptive Streaming for HTTP (HyperText Transfer Protocol)) for Internet streaming. 3GPP/ MPEG DASH defines a way of how on-demand or live video content can be received using HTTP. More specifically, the media stream is segmented into media segments (i.e. segment files), which can then be provided over HTTP. These segment files are then later provided to client devices using any suitable protocol. The client devices have buffers to store and decode the segment files to provide continuous content presentation to the users of the client devices.

US2011/0082924 A1 discloses a technique for controlling streaming of content through a network, where a manifest, received by an intermediate network node, is edited by the intermediate node, after which the manifest is transmitted to a client, thereby enabling for the client to control the streaming.

However, the content delivery path from the content source to the client devices comprises many parts. It is desired to improve reliability and control over the content delivery path.

### SUMMARY

It is an object to improve control over the content delivery path.

According to a first aspect, it is presented a method for providing live content comprising a plurality of sequential segment files to at least one client device. The method being performed in a multimedia streaming service node and comprising the steps of: receiving metadata for the live content, the metadata comprising references to at least one representation of the live content, wherein each representation corresponds to a bitrate and defines timing of at least one of the segment files; creating a schedule defining when to obtain at least one of the segment files; pulling segment files from a content source in accordance with the schedule; and gradually pushing the pulled segment files over a bearer to the at least one client device, as the segment files are pulled to the multimedia streaming service node. By pulling the segment files for the live content, the multimedia streaming service node takes greater control over the content delivery. This reduces a risk of disruptions in content delivery e.g. due to late delivery of the content from the content source.

The step of creating a schedule may comprise creating a schedule based on the metadata. The metadata comprises sufficient information to create a schedule to enable the pulling of segment files.

The step of gradually pushing the segment files may comprise pushing the segment files over a unidirectional delivery protocol.

The unidirectional delivery protocol may comply with File Delivery over Unidirectional Transport, FLUTE, version 2 or later.

The step of pulling the segment files may comprise requesting the segment files over Hypertext Transfer Protocol, HTTP or File Transfer Protocol, FTP.

The method may further comprise the steps of: determining a capacity of the bearer to be used for pushing segment files; and selecting only one or more representations having a corresponding bitrate being within the capacity of the bearer; and the step of pulling segment files may comprise pulling only segment files of the one or more selected representations. In other words, representations which are too demanding in terms of bitrate are ignored by the multimedia streaming service node, making the processing more efficient.

The method may further comprise the steps of: determining a capacity of the bearer to be used for pushing segment files; determining a transcoding bitrate being within the capacity of the bearer; and gradually transcoding the pulled segment files in accordance with the transcoding bitrate as the segment files are pulled to the multimedia streaming service node, giving transcoded pulled segment files; and the step of gradually pushing may comprise gradually pushing the transcoded pulled segment files as these become available. By transcoding, the bitrate can be customised in accordance with the capacity, and the multimedia streaming service node does not need to select one of the available bitrates, which may either be too demanding or too low quality, for the available capacity.

The timing of a segment file may comprise a time reference determining when the segment file will become available.

In the step of receiving metadata, the metadata may comprise a file delivery rule corresponding to a data file being separate from streamed media of the live content; and the method may further comprise the steps of: pulling a data file referred to in the file delivery rule; and pushing the data file to the at least one client device. This allows a separate delivery of data files which the client device could use in parallel to the live content. The file delivery rule could e.g. comprise schedule information regarding when the data file should be delivered to the client devices.

The method may further comprise the step of: determining a data file bitrate to use for pushing the data file; and the step of selecting only one or more representations may comprise selecting only one or more representations having a corresponding bitrate being within an adjusted capacity, being the capacity of the bearer subtracted by the data file bitrate. In other words, the bandwidth requirement for delivery of the data file is considered when determining the capacity which is available for the live content delivery to the client devices.

According to a second aspect, it is provided a multimedia streaming service node for providing live content comprising a plurality of sequential segment files to at least one client device. The multimedia streaming service node comprises: a processor; and a memory storing instructions that, when executed by the processor, causes the multimedia streaming service node to: receive metadata for the live content, the metadata comprising references to at least one representation of the live content, wherein each representation corresponds to a bitrate and defines timing of at least one of the segment files; create a schedule defining when to obtain at least one of the segment files; pull segment files from a content source in accordance with the schedule; and gradually push the pulled segment files over a bearer to the at least one client device, as the segment files are pulled to the multimedia streaming service node.

The instructions to create a schedule may comprise instructions that, when executed by the processor, causes the multimedia streaming service node to create a schedule based on the metadata.

The instructions to gradually push the segment files may comprise instructions that, when executed by the processor, causes the multimedia streaming service node to push the segment files over a unidirectional delivery protocol.

The unidirectional delivery protocol may comply with File Delivery over Unidirectional Transport, FLUTE, version 2 or later.

The instructions to pull the segment files may comprise instructions that, when executed by the processor, causes the multimedia streaming service node to request the segment files over Hypertext Transfer Protocol, HTTP or File Transfer Protocol, FTP.

The multimedia streaming service node may further comprise instructions that, when executed by the processor, causes the multimedia streaming service node to: determine a capacity of the bearer to be used for pushing segment files; and select only one or more representations having a corresponding bitrate being within the capacity of the bearer; and the instructions to pull segment files may comprise instructions that, when executed by the processor, causes the multimedia streaming service node to pull only segment files of the one or more selected representations.

The multimedia streaming service node may further comprise instructions that, when executed by the processor, causes the multimedia streaming service node to: determine a capacity of the bearer to be used for pushing segment files; determine a transcoding bitrate being within the capacity of the bearer; and gradually transcode the pulled segment files in accordance with the transcoding bitrate as the segment files are pulled to the multimedia streaming service node, giving transcoded pulled segment files; and the instructions to gradually push may comprise instructions that, when executed by the processor, causes the multimedia streaming service node to gradually push the transcoded pulled segment files as these become available.

The timing of a segment file may comprise a time reference determining when the segment file will become available.

The instructions to receive metadata comprise instructions that, when executed by the processor, causes the multimedia streaming service node to receive metadata comprising a file delivery rule corresponding to a data file being separate from streamed media of the live content; and the instructions may further comprise instructions that, when executed by the processor, causes the multimedia streaming service node to: pull a data file referred to in the file delivery rule; and push the data file to the at least one client device.

The multimedia streaming service node may further comprise instructions that, when executed by the processor, causes the multimedia streaming service node to: determine a data file bitrate to use for pushing the data file and; and the instructions to select only one or more representations may comprise instructions that, when executed by the processor, causes the multimedia streaming service node to select only one or more representations having a corresponding bitrate being within an adjusted capacity, being the capacity of the bearer subtracted by the data file bitrate.

According to a third aspect, it is presented a computer program for providing live content comprising a plurality of sequential segment files to at least one client device. The computer program comprises computer program code which, when run on a multimedia streaming service node causes the multimedia streaming service node to: receive metadata for the live content, the metadata comprising references to at least one representation of the live content, wherein each representation corresponds to a bitrate and defines timing of at least one of the segment files; create a schedule defining when to obtain at least one of the segment files; pull segment files from a content source in accordance with the schedule; and gradually push the pulled segment files over a bearer to the at least one client device, as the segment files are pulled to the multimedia streaming service node.

According to a fourth aspect, it is presented a computer program product comprising a computer program according to the third aspect and a computer readable means on which the computer program is stored.

According to a fifth aspect, it is presented a multimedia streaming service node comprising: means for receiving metadata for live content comprising a plurality of sequential segment files, the metadata comprising references to at least one representation of the live content, wherein each representation corresponds to a bitrate and defines timing of at least one of the segment files; means for creating a schedule defining when to obtain at least one of the segment files; means for pulling segment files from a content source in accordance with the schedule; and means for gradually pushing the pulled segment files over a bearer to at least one client device, as the segment files are pulled to the multimedia streaming service node.

The means for creating a schedule may comprise means for creating a schedule based on the metadata.

The means for gradually pushing the segment files may comprise means for pushing the segment files over a unidirectional delivery protocol.

The unidirectional delivery protocol may comply with File Delivery over Unidirectional Transport, FLUTE, version 2 or later.

The means for pulling the segment files may comprise means for requesting the segment files over Hypertext Transfer Protocol, HTTP or File Transfer Protocol, FTP.

The multimedia streaming service node may further comprise means for determining a capacity of the bearer to be used for pushing segment files; and means for selecting only one or more representations having a corresponding bitrate being within the capacity of the bearer; and the means for pulling segment files may comprise means for pulling only segment files of the one or more selected representations.

The multimedia streaming service node may further comprise means for determining a capacity of the bearer to be used for pushing segment files; means for determining a transcoding bitrate being within the capacity of the bearer; and means for gradually transcoding the pulled segment files in accordance with the transcoding bitrate as the segment files are pulled to the multimedia streaming service node, giving transcoded pulled segment files; and the means for gradually pushing may comprise means for gradually pushing the transcoded pulled segment files as these become available.

The timing of a segment file may comprise a time reference determining when the segment file will become available.

The metadata may comprise a file delivery rule corresponding to a data file being separate from streamed media of the live content; and the multimedia streaming service node may further comprise means for pulling a data file referred to in the file delivery rule; and means for pushing the data file to the at least one client device.

The multimedia streaming service node may further comprise the means for: determining a data file bitrate to use for pushing the data file; and the means for selecting only one or more representations may comprise means for selecting only one or more representations having a corresponding bitrate being within an adjusted capacity, being the capacity of the bearer subtracted by the data file bitrate.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating a media delivery system where embodiments presented herein may be applied;
Fig 2 is a schematic diagram illustrating the media delivery system of Fig 1 in some more detail;
Fig 3 is a schematic diagram illustrating how media data is segmented for a representation of media used in the media delivery system of Figs 1 and 2;
Figs 4A-B are flow charts illustrating methods for providing live content performed in the BM-SC of Figs 1 and 2;
Fig 5 is a schematic diagram showing some components of the BM-SC of Figs 1 and 2;
Fig 6 is a schematic diagram showing functional modules of the BM-SC of Figs 1 and 2; and
Fig 7 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

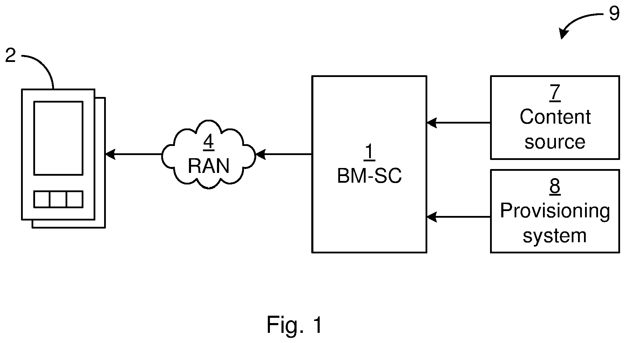

Fig 1 is a schematic diagram illustrating a media delivery system 9 where embodiments presented herein may be applied for streaming of live media and optionally also on-demand media. The media delivery system can e.g. comply with MPEG DASH.

The sequence of media segment URIs (Uniform Resource Identifiers) is described in a manifest file such as an MPD (Media Presentation Document). The MPD may describe the sequence of media segment URIs as a playlist or in template format based on sequence numbers.

Looking now to the elements shown in Fig 1, the media delivery system 9 comprises a radio access network 4, comprising one or more radio base stations (not shown), such as evolved Node Bs, note Bs, BTSs (Base Transceiver Station) and/or BSSs (Base Station Subsystem), etc. The radio access network 4 provides radio connectivity to a plurality of client devices 2. The client devices 2 can receive data from (and send to) the radio access network 4. The client devices 2 shown here are capable of receiving a broadcast and/or a multicast content feed. The client devices 2 may be implemented in a mobile communication terminal, user equipment (UE), mobile terminal, user terminal, user agent, machine-to-machine device etc., and can be implemented, for example, using what today are commonly known as a mobile phone, smart phone or a tablet/laptop with wireless connectivity or fixed mounted terminal.

The media delivery system 9 in general, and the radio access network in particular, may e.g. comply with any one or a combination of LTE-SAE (Long Term Evolution - System Architecture Evolution), W-CDMA (Wideband Code Division Multiplex), EDGE (Enhanced Data Rates for GSM (Global System for Mobile communication) Evolution), GPRS (General Packet Radio Service), CDMA2000 (Code Division Multiple Access 2000), or any other current or future wireless network, such as LTE-Advanced, as long as the principles described hereinafter are applicable.

The media delivery system 9 further comprises components to support broadcast content, in a broadcast or a multicast way, i.e. multiple client devices 2 can receive the same content in a point-to-multipoint fashion. This increases network efficiency, e.g. compared to point-to-point streaming, also known as unicast.

The components for broadcast can comply with any suitable standard, e.g. 3GPP MBMS (3^{rd} Generation Partnership Project Multimedia Broadcast Multicast Service), 3GPP MBMS Evolution, 3GPP 1MB (Integrated Mobile Broadcast), 3GPP eMBMS (Evolved MBMS), DVB-H (Digital Video Broadcasting - Handheld), DVB-NGH (Digital Video Broadcasting - Next Generation Handheld), or any other current or future broadcast system over wireless networks, as long as the principles described hereinafter are applicable. In this document, embodiments are presented as applied in 3GPP MBMS release 6 or later, but it is to be understood that this does not imply that any other standard is excluded.

A multimedia streaming service node 1, such as a Broadcast Multicast Service Center (BM-SC) is also provided. Hereinafter, the term BM-SC will be used, but it is to be understood that the embodiments presented can equally well be employed with other embodiments of multimedia streaming service nodes. The multimedia streaming service node 1 coordinates the general flow of content from one or more content sources, here represented by content source 7 to the client devices 2.

One or more content sources 7, provides content e.g. through a content delivery network (CDN), or any other type of suitable network, to the BM-SC 1. A provisioning system 8 provides metadata to the BM-SC for the content. In this way, the BM-SC 1 sets up a content flow so that the client devices 2 can receive broadcast content from the content source 7 via the RAN 4 and the BM-SC 1. The content which is provided from the content source 7 can e.g. comprise video content and/or audio content.

In order not to obscure the concepts presented herein, other (sometimes optional) network nodes such as e.g. Radio Network Controller, GGSN (Gateway GPRS (general packet radio service) support node), SGSN (serving GPRS support node), MBMS gateway, etc., are omitted from the media delivery system 9 of Fig 1, but may be used as needed during operation. Other components not required to present the embodiments presented herein are omitted for reasons of clarity.

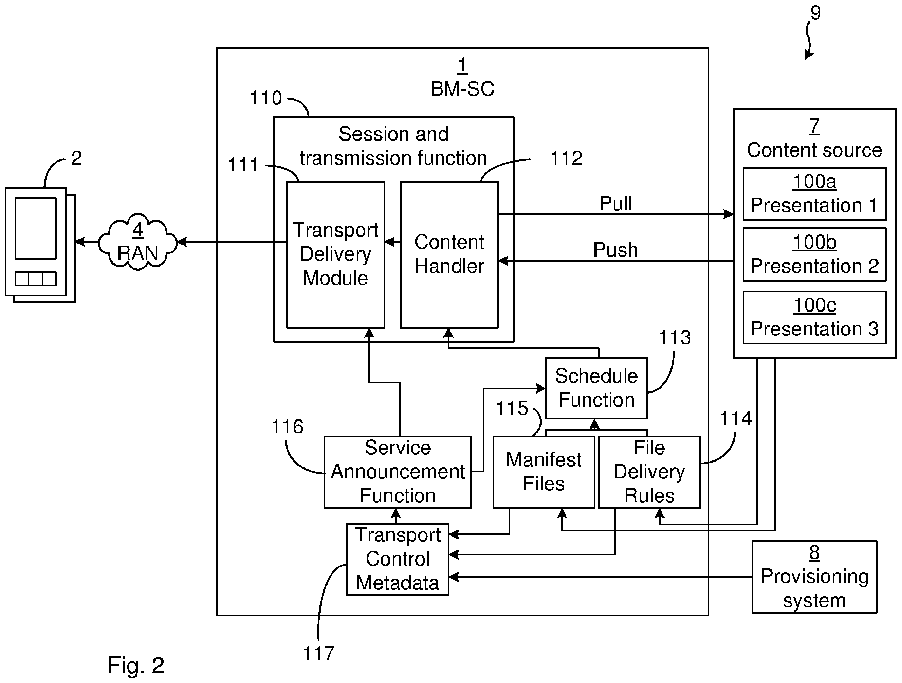

Fig 2 is a schematic diagram illustrating the media delivery system of Fig 1 in some more detail. It is to be noted that the functions and objects of Fig 2 are presented mainly to describe the media content flow. These functions and objects of the BM-SC may, but do not need to, be implemented using the same structure.

The content source 7 here provides a first representation 100a, a second representation 100b and a third representation 100c. The three representations 100a-c are different versions of the same content. In particular, the different representations may be of different bitrates. In this way, a representation suitable for the capacity of the delivery channel can be selected. Each piece of content can involve one or several representations each.

The provisioning system 8 provides transport control metadata 117 to a service announcement function 116 of the BM-SC 1. The transport control metadata 117 can e.g. be contained in MBMS user service description metadata fragments, such as schedule description metadata fragments described in section 11.2A of 3GPP TS 26.346 V9.7.0. The content source 7 provides manifest file(s) 115 and file delivery rules 114 to a schedule function 113 of the BM-SC. The manifest file(s) 115 and the file delivery rules also form part of the transport control metadata 117 provided to the service announcement function 116. The file delivery rules 114 describe how a delivery of files separate from, but associated with, the media content is to be delivered. This allows the service announcement function 116 to announce the availability of the content to client devices 2 using a transport delivery module 111 of a session and transmission function 110.

The schedule function 113 generates a schedule based e.g. on a schedule fragment in the transport control metadata 117 and information in the manifest files 115 and (if needed for file delivery use cases) the file delivery rules. The resulting schedule is provided to a content handler 112 of the session and transmission function 110. The content handler 112 then pulls the content from the content source 7 by providing timed and sequenced requests to the content source 7 for delivery of content to the client devices. It is to be noted that the BM-SC 1 may also, but does not need to, support push based content delivery, where the content source 7 pushes content to the BM-SC 1, e.g. by providing files to a specified WebDAV (Web Distributed Authoring and Versioning) directory. In such a case, some content can be delivered to the BM-SC 1 using the pull mechanism and some content can be delivered to the BM-SC 1 using the push mechanism.

By pulling the content, as described in embodiments herein, means that BM-SC 1 has more control of the scheduling and is not as dependent on delivery of content from the content source 7. In the prior art, late or early arrival of content from the content source 7 results in transport related time of arrival deviations at the client device compared to those announced by the service announcement function 116.

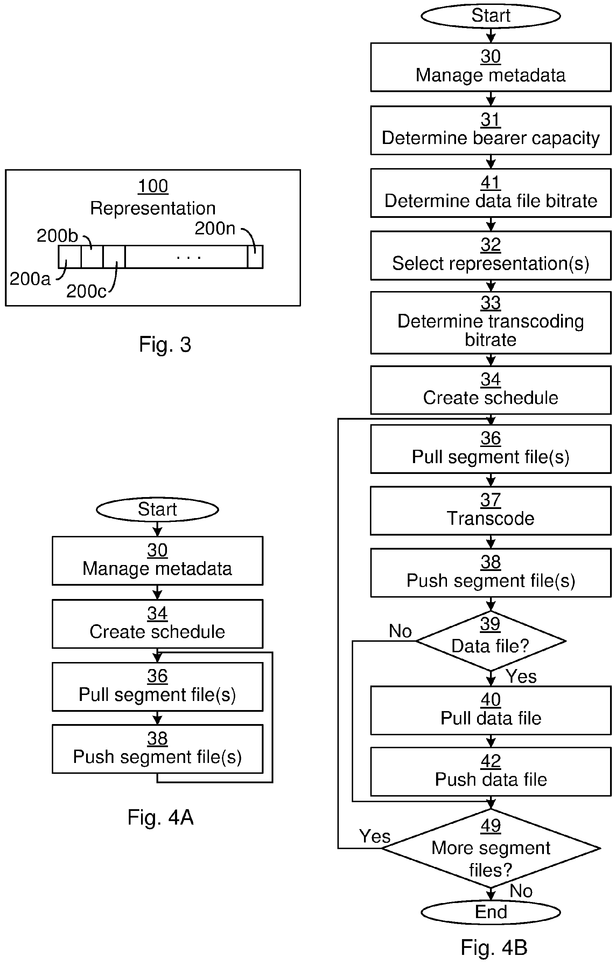

Fig 3 is a schematic diagram illustrating how media data is segmented for a representation of media content used in the media delivery system of Figs 1 and 2. The representations 100a-c of Fig 2 are here represented by a single representation 100.

The representation 100 comprises n (in time) sequential segment files 200an. The number n can be any natural number. Each segment file covers an equal amount of time of the content, e.g. a number of seconds or similar. Figs 4A-B are flow charts illustrating methods for providing live content performed in the BM-SC of Figs 1 and 2. The methods are performed for a particular instance of live media content (audio and/or video) and may be performed in parallel for several instances of media content. First, the method illustrated in Fig 4A will be described.

In a *manage metadata* step 30, metadata is received for the live content. The metadata comprises references to at least one representation (see 100a-c of Fig 2) of the live content, wherein each representation may e.g. correspond to a specific bitrate and defines timing of at least one of the segment files. The metadata can e.g. be a manifest file such as an MPD. The timing of a segment file may comprise a time reference determining when the segment file will become available.

The *manage metadata* step 30 optionally includes modifying the metadata and providing the metadata to the client devices.

In a *create schedule* step 34, a schedule defining when to obtain at least one of the segment files is created. This may comprise creating a schedule based on the metadata.

In *a pull segmentfile(s)* step 36, segment files are pulled from a content source in accordance with the schedule. The pulling of segment files may comprise requesting the segment files over any suitable interactive two-way protocol, such as HTTP or FTP (File Transfer Protocol).

In a *push segment file(s)* step 38, the pulled segment files are gradually pushed over a bearer to the at least one client device, as the segment files are pulled to the multimedia streaming service node. Gradually is here to be interpreted as file by file or a set of files at a time. The pushing of segment files may e.g. occur over a unidirectional delivery protocol e.g. complying with File Delivery over Unidirectional Transport (FLUTE) version 2 or later.

An example will now be presented to illustrate how the method of Fig 4A could be used.

A content source generates video and audio content using a camera, a microphone and a live encoder, which thus provides segment files into a content delivery network of the content source. Suppose that the live encoder is started at 15.45. Now we want the BM-SC to pull segments from the content source and transport them to client devices in such a way they are made available to start playing at the client devices at 16.00. Let us also say that we have a 30 second transmission delay offset (DeltaT) in our content delivery path and through the delivery to the client devices. The delay offset parameter (DeltaT) can e.g. be provided by the provisioning system, as part of the transport control metadata.

In the *manage metadata* step 30, the BM-SC receives the transport control metadata and the manifest file (e.g. DASH MPD). The manifest file is fetched from the content source, which depends on the live encoder announcing that it has a parameter AvailabilityStartTime = 15.45. In this example, each segment file covers 2 seconds. As described above, the transport control metadata can e.g. be contained in MBMS user service description metadata fragments, such as schedule description metadata fragments described in section 11.2A of 3GPP TS 26.346 V9.7.0

After some potential modifications, this metadata will be provided to the client devices. For instance, the metadata is assembled in a service announcement which is provided to the client devices (from the service announcement function 116 of Fig 2). The service announcement comprises the transport control metadata, including a schedule fragment called sessionSchedule, which defines when the broadcast is scheduled to start. Let's say the schedule fragment sessionSchedule is set to 16.00. Hence, the client devices know that the broadcast is due to start at 16.00.

The manifest file is also announced to the client devices.

In the *create schedule* step 34, since the schedule fragment sessionSchedule is set to 16.00 and DeltaT is 30 seconds, then the schedule is generated to start pulling segment files from the content source at 16.00 - 30 secs = 15.59.30.

In the *pull segmentfile(s)* step 36, the BM-SC checks the manifest to find out where (URI) to start pulling DASH segments from, e.g. using HTTP or FTP. The live encoder has been active from 15.45:00 to 15.59.30 (meaning since we are talking about 2 second segments, it has already provided 485 segment files). So if the live encoder started sending at segment "n" then the segment at 15.59.30 is n + 485. Each segment file is then pushed from the BM-SC in *the push segment file(s)* step 38 to the client device, e.g. over FLUTE.

On the client device side, the scheduled time of 16.00 arrives and the player in the client device is triggered to look at its manifest. It discovers that the AvailabilityStartTime parameter is 15.45 and also that the current time is 16.00. It looks at the manifest file and sees that the SegmentDuration parameter is 2.00 seconds. It also looks at the startNumber parameter (which equals n) and thus calculates which segment it should play (485 + startNumber).

Fig 4B illustrates a method similar to the method of Fig 4A. Only steps that are new or that differ from what is described with reference to Fig 4A will be described here.

Optionally, in the *manage metadata* step 30, the metadata comprises a file delivery rule corresponding to a data file being separate from streamed media of the live content. When such a file delivery rule is present, the data file should also be provided to the client devices, as is explained in more detail below.

After the *manage metadata* step 30, there is here an optional *determine bearer capacity* step 31, in which a capacity of the bearer to be used for pushing segment files is determined.

There is also an optional *determine data file bitrate* step 41 in which a data file bitrate to be used for pushing the data file is determined.

In a *select representation(s)* step 32, one or more representations having a corresponding bitrate being within the capacity of the bearer are selected. No representations with corresponding bitrates being greater than the capacity of the bearer are selected. When the *determine data file bitrate* step 41 is performed, it is ensured that the one or more selected representations each have a corresponding bitrate being within an adjusted capacity, where the adjusted capacity is the capacity of the bearer subtracted by the data file bitrate. Optionally, only one representation is selected, which e.g. could be the representation with the highest bitrate within the determined capacity.

Optionally, when no representation with appropriate bitrate can be found, transcoding of content can be performed. In such a case, there is here a *determine transcoding bitrate* step 33, in which a transcoding bitrate being within the capacity of the bearer is determined. When the *determine data file bitrate* step 41 is performed, it is ensured that the transcoding bitrate is within an adjusted capacity, where the adjusted capacity is the capacity of the bearer subtracted by the data file bitrate.

When the *select representations(s)* step 32 is performed, the *pull segment file(s)* step 36 comprises pulling only segment files of the one or more selected representations.

When transcoding is performed, this is done in the *transcode* step 37, which occurs after the *pull segment file(s)* step 36 and before the *push segment file(s)* step 38. The transcoding can be performed on each pulled segment file as it becomes available or on a set of segment files at a time. The *push segment file(s)* step 38 then comprises gradually pushing the transcoded pulled segment files as these become available. It is to be noted that the transcoding can affect the transmission delay offset which may thus need to be reflected in the schedule.

Optionally, in the *transcode* step 37, in addition to, or instead of, bitrate transcoding, the DRM (Digital Rights Management) scheme can be altered. The BM-SC then decrypts the segment file in question and encrypts the segment file according to a new DRM scheme which allows the client devices to decrypt the segment file.

After the *push segment file(s)* step 38 or in parallel to the segment file handling, there are optional steps 39, 40, 42 to handle data file delivery. Such data files are not streamed in accordance with MBMS or eMBMS but are instead provided separately but may be e.g. presented by the client device in addition to rendering streamed content. For example, such file delivery can provide separate data for presentation to the client device, e.g. rendering of a slide presentation in parallel to the streamed video and/or audio.

In the *conditional data file* step 39, it is determined whether there is a data file to be delivered. If this is the case, the method continues to the pull data file 40. Otherwise, the method continues to a conditional *more segment files* step 49 (or loops back to the same step if the data file handling is performed in parallel to the segment file handling).

In a *pull data file* step 40, a data file referred to in the file delivery rule is pulled.

In a *push data file* step 42, the data file is pushed to the at least one client device. Once received, the client device can optionally verify the segment file e.g. using a checksum such as CRC (Cyclic Redundancy Check) or MD5 (Message Digest 5). The pushing of the data file may optionally occur over a unidirectional delivery protocol e.g. complying with File Delivery over Unidirectional Transport (FLUTE) version 2 or later.

In the conditional *more segment files* step 49, it is checked whether there are any more segment files. When this is the case, the method returns to the *pull segment file(s)* step 36. Otherwise the method ends.

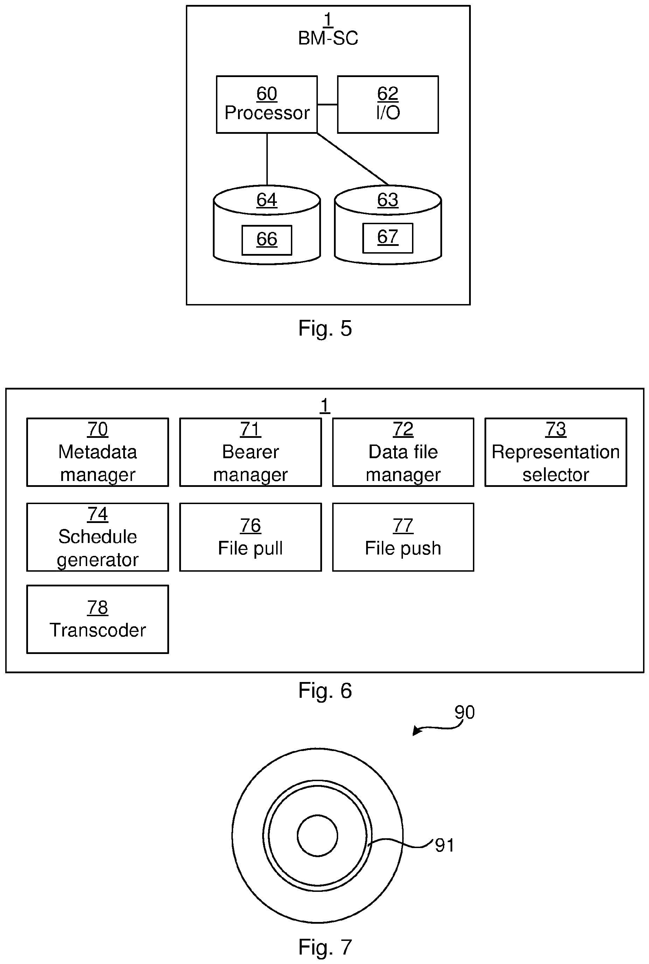

Fig 5 is a schematic diagram showing some components of the BM-SC 1 of Fig 1. A processor 60 is provided using any combination of one or more of a suitable central processing unit (CPU), multiprocessor, microcontroller, digital signal processor (DSP), application specific integrated circuit etc., capable of executing software instructions 66 stored in a memory 64. The memory can thus be considered to be or form part of a computer program product. The processor 60 can be configured to execute the method described with reference to Figs 4A-B above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 63 is also provided for reading and/or storing data during execution of software instructions in the processor 60. The data memory 63 can be any combination of read and write memory (RAM) and read only memory (ROM) and may also comprise persistent storage, which, for example, can be any single one or combination of magnetic memory, optical memory, solid state memory or even remotely mounted memory. The data memory 63 can e.g. hold metadata 67, such as manifest files, file delivery rules and transport control metadata.

The BM-SC 1 further comprises an I/O interface 62 for communicating with other external entities, e.g. using a wired galvanic and/or optical network connection for communication with the content source 7, provisioning system 8 and any other components. Optionally, the I/O interface 62 also includes a user interface (not shown).

Other components of the BM-SC 1 are omitted in order not to obscure the concepts presented herein.

Fig 6 is a schematic diagram showing functional modules of the BM-SC 1 of Fig 1. The modules can be implemented using software instructions such as a computer program executing in the BM-SC 1 and/or using hardware, such as application specific integrated circuits, field programmable gate arrays, discrete logical components, transceivers, etc. or as a combination thereof. The modules correspond to the steps in the methods illustrated in Figs 4A-B.

A metadata manager 70 is arranged to manage metadata for the live content. This module corresponds to the *manage metadata* step 30 of Figs 4A-B. This module can e.g. be implemented by the schedule function 113 and the service announcement function 116 of Fig 2.

A bearer manager 71 is arranged to determine the capacity of the bearer to be used for pushing segment files. This module corresponds to the *determine bearer capacity* step 31 of Fig 4B. This module can e.g. by implemented by the session and transmission function 110 of Fig 2.

A data file manager 72 is arranged to determine a data file bitrate. This module corresponds to the *determine data file bitrate* step 41 of Fig 4B. This module can e.g. be implemented by the schedule function 113 of Fig 2.

A representation selector 73 is arranged to select representation(s) in accordance with capacity. This module corresponds to the *select representation(s)* step 32 of Fig 4B. This module can e.g. be implemented by the session and transmission function 110 of Fig 2.

A schedule generator 74 is arranged to create a schedule defining when to obtain the segment files. This module corresponds to the *create schedule* step 34 of Figs 4A-B. This module can e.g. be implemented by the schedule function 113 of Fig 2.

A file pull module 76 is arranged to pull files to the BM-SC 1. This includes segment files and data files, when applicable. This module corresponds to the *pull segment file(s)* step 36 of Figs 4A-B and the *pull data file* step 40 of Fig 4B. This module can e.g. be implemented by the content handler 112 of Fig 2.

A file push module 77 is arranged to push files to client devices. This includes segment files and data files, when applicable. This module corresponds to the *push segment file(s)* step 38 of Figs 4A-B and the *push data file* step 42 of Fig 4B. This module can e.g. be implemented by the content handler 112 of Fig 2.

A transcoder 78 is arranged to transcode segment files. This module corresponds to the *determine transcoding bitrate* step 33 and the *transcode* step 37 of Fig 4B. This module can e.g. be implemented by the content handler 112 of Fig 2.

Fig 7 shows one example of a computer program product 90 comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 66 of Fig 7 or as a removable solid state memory, e.g. a flash storage memory. While the computer program 91 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for providing live content comprising a plurality of sequential segment files to at least one client device (2), the method being performed in a multimedia streaming service node (1) and comprising the steps of:
receiving (30) metadata for the live content, the metadata comprising references to at least one representation (100a-c) of the live content, wherein each representation (100a-c) corresponds to a bitrate and defines timing of at least one of the segment files;
creating (34), based on the metadata, a schedule defining when to obtain at least one of the segment files;
pulling (36) segment files from a content source in accordance with the schedule; and
gradually pushing (38) the pulled segment files over a bearer to the at least one client device, as the segment files are pulled to the multimedia streaming service node (1).

2. The method according to claim 1, wherein the step of gradually pushing (38) the segment files comprises pushing the segment files over a unidirectional delivery protocol.

3. The method according to claim 2, wherein the unidirectional delivery protocol complies with File Delivery over Unidirectional Transport, FLUTE, version 2 or later.

4. The method according to any one of the preceding claims, wherein the step of pulling (36) the segment files comprises requesting the segment files over Hypertext Transfer Protocol, HTTP or File Transfer Protocol, FTP.

5. The method according to any one of the preceding claims, further comprising the steps of:
determining (31) a capacity of the bearer to be used for pushing segment files; and
selecting (32) only one or more representations having a corresponding bitrate being within the capacity of the bearer;
and wherein the step of pulling (36) segment files comprises pulling only segment files of the one or more selected representations.

6. The method according to any one of the preceding claims, further comprising the steps of:
determining (31) a capacity of the bearer to be used for pushing segment files;
determining (33) a transcoding bitrate being within the capacity of the bearer; and
gradually transcoding (37) the pulled segment files in accordance with the transcoding bitrate as the segment files are pulled to the multimedia streaming service node (1), giving transcoded pulled segment files; and
wherein the step of gradually pushing (38) comprises gradually pushing the transcoded pulled segment files as these become available.

7. The method according to any one of the preceding claims, wherein the timing of a segment file comprises a time reference determining when the segment file will become available.

8. The method according to any one of the preceding claims, wherein in the step of receiving (30) metadata, the metadata comprises a file delivery rule corresponding to a data file being separate from streamed media of the live content; and
wherein the method further comprises the steps of:
pulling (40) a data file referred to in the file delivery rule; and
pushing (42) the data file to the at least one client device.

9. The method according to claim 8 when dependent on claim 6, further comprising the step of:
determining (41) a data file bitrate to use for pushing the data file; and
wherein the step of selecting (32) only one or more representations comprises selecting only one or more representations having a corresponding bitrate being within an adjusted capacity, being the capacity of the bearer subtracted by the data file bitrate.

10. A multimedia streaming service node (1) for providing live content comprising a plurality of sequential segment files to at least one client device, the multimedia streaming service node (1) comprising:
a processor (60); and
a memory (64) storing instructions (66) that, when executed by the processor, causes the multimedia streaming service node (1) to:
receive metadata for the live content, the metadata comprising references to at least one representation (100a-c) of the live content, wherein each representation (100a-c) corresponds to a bitrate and defines timing of at least one of the segment files;
create, based on the metadata, a schedule defining when to obtain at least one of the segment files;
pull segment files from a content source in accordance with the schedule; and
gradually push the pulled segment files over a bearer to the at least one client device, as the segment files are pulled to the multimedia streaming service node (1).

11. The multimedia streaming service node (1) according to claim 10, wherein the instructions to gradually push the segment files comprise instructions that, when executed by the processor, causes the multimedia streaming service node (1) to push the segment files over a unidirectional delivery protocol.

12. The multimedia streaming service node (1) according to claim, 11 wherein the unidirectional delivery protocol complies with File Delivery over Unidirectional Transport, FLUTE, version 2 or later.

13. The multimedia streaming service node (1) according to any one of claims 10 to 12, wherein the instructions to pull the segment files comprise instructions that, when executed by the processor, causes the multimedia streaming service node (1) to request the segment files over Hypertext Transfer Protocol, HTTP or File Transfer Protocol, FTP.

14. The multimedia streaming service node (1) according to any one of claims 10 to 13, further comprising instructions that, when executed by the processor, causes the multimedia streaming service node (1) to:
determine a capacity of the bearer to be used for pushing segment files; and
select only one or more representations having a corresponding bitrate being within the capacity of the bearer;
and wherein the instructions to pull segment files comprise instructions that, when executed by the processor, causes the multimedia streaming service node (1) to pull only segment files of the one or more selected representations.

15. The multimedia streaming service node (1) according to any one of claims 10 to 14, further comprising instructions that, when executed by the processor, causes the multimedia streaming service node (1) to:
determine a capacity of the bearer to be used for pushing segment files;
determine a transcoding bitrate being within the capacity of the bearer; and
gradually transcode the pulled segment files in accordance with the transcoding bitrate as the segment files are pulled to the multimedia streaming service node (1), giving transcoded pulled segment files; and
wherein the instructions to gradually push comprise instructions that, when executed by the processor, causes the multimedia streaming service node (1) to gradually push the transcoded pulled segment files as these become available.

16. The multimedia streaming service node (1) according to any one of claims 10 to 15, wherein the timing of a segment file comprises a time reference determining when the segment file will become available.

17. The multimedia streaming service node (1) according to any one of claims 10 to 16, wherein the instructions to receive metadata comprise instructions that, when executed by the processor, causes the multimedia streaming service node (1) to receive metadata comprising a file delivery rule corresponding to a data file being separate from streamed media of the live content; and
wherein the instructions further comprise instructions that, when executed by the processor, causes the multimedia streaming service node (1) to:
pull a data file referred to in the file delivery rule; and
push the data file to the at least one client device.

18. The multimedia streaming service node (1) according to claim 17 when dependent on claim 15, further comprising instructions that, when executed by the processor, causes the multimedia streaming service node (1) to:
determine a data file bitrate to use for pushing the data file and; and
wherein the instructions to select only one or more representations comprise instructions that, when executed by the processor, causes the multimedia streaming service node (1) to select only one or more representations having a corresponding bitrate being within an adjusted capacity, being the capacity of the bearer subtracted by the data file bitrate.

19. A computer program (66, 91) for providing live content comprising a plurality of sequential segment files to at least one client device, the computer program comprising computer program code which, when run on a multimedia streaming service node (1) causes the multimedia streaming service node (1) to:
receive metadata for the live content, the metadata comprising references to at least one representation (100a-c) of the live content, wherein each representation (100a-c) corresponds to a bitrate and defines timing of at least one of the segment files;
create, based on the metadata, a schedule defining when to obtain at least one of the segment files;
pull segment files from a content source in accordance with the schedule; and
gradually push the pulled segment files over a bearer to the at least one client device, as the segment files are pulled to the multimedia streaming service node (1).

20. A computer program product (66, 90) comprising a computer program according to claim 19 and a computer readable means on which the computer program is stored.

## Patentansprüche

1. Verfahren zum Bereitstellen von Live-Inhalten, umfassend eine Vielzahl von sequentiellen Segmentdateien für mindestens ein Client-Gerät (2), wobei das Verfahren in einem Multimedia-Streaming-Dienstknoten (1) durchgeführt wird, und umfassend die folgenden Schritte:
Empfangen (30) von Metadaten für die Live-Inhalte, wobei die Metadaten Verweise auf mindestens eine Darstellung (100a-c) der Live-Inhalte umfassen, wobei jede Darstellung (100a-c) einer Bitrate entspricht und das Timing mindestens einer der Segmentdateien definiert;
Erzeugen (34), basierend auf den Metadaten, einer Planung, die definiert, wann mindestens eine der Segmentdateien zu erhalten ist;
Ziehen (36) von Segmentdateien aus einer Inhaltsquelle nach dem Pull-Prinzip in Übereinstimmung mit der Planung; und
allmähliches Drücken (38) der nach dem Pull-Prinzip gezogenen Segmentdateien nach dem Push-Prinzip über einen Träger zu dem mindestens einen Client-Gerät, wenn die Segmentdateien nach dem Pull-Prinzip zu dem Multimedia-Streaming-Dienstknoten (1) gezogen werden.

2. Verfahren nach Anspruch 1, wobei der Schritt des allmählichen Drückens (38) der Segmentdateien nach dem Push-Prinzip das Drücken der Segmentdateien über ein unidirektionales Zustellungsprotokoll nach dem Push-Prinzip umfasst.

3. Verfahren nach Anspruch 2, wobei das unidirektionale Zustellungsprotokoll der Dateizustellung über unidirektionalen Transport, FLUTE, Version 2 oder später, entspricht.

4. Verfahren nach einem der vorstehenden Ansprüche, wobei der Schritt des Ziehens (36) der Segmentdateien das Anfordern der Segmentdateien über Hypertext Transfer Protocol, HTTP, oder File Transfer Protocol, FTP, nach dem Pull-Prinzip umfasst.

5. Verfahren nach einem der vorstehenden Ansprüche, das ferner die folgenden Schritte umfasst:
Bestimmen (31) einer Kapazität des Trägers, der zum Drücken von Segmentdateien nach dem Push-Prinzip verwendet werden soll; und
Auswählen (32) von nur einer oder mehreren Darstellungen mit einer entsprechenden Bitrate, die innerhalb der Kapazität des Trägers liegt;
und wobei der Schritt des Ziehens (36) von Segmentdateien nach dem Pull-Prinzip das Ziehen nach dem Pull-Prinzip nur von Segmentdateien der einen oder mehreren ausgewählten Darstellungen umfasst.

6. Verfahren nach einem der vorstehenden Ansprüche, das ferner die folgenden Schritte umfasst:
Bestimmen (31) einer Kapazität des Trägers, der für das Drücken von Segmentdateien nach dem Push-Prinzip verwendet werden soll;
Bestimmen (33) einer Transcodierungsbitrate, die innerhalb der Kapazität des Trägers liegt; und
allmähliches Transcodieren (37) der nach dem Pull-Prinzip gezogenen Segmentdateien gemäß der Transcodierungsbitrate, wenn die Segmentdateien zu dem Multimedia-Streaming-Dienstknoten (1) gezogen werden, was transcodierte, nach dem Pull-Prinzip gezogene Segmentdateien ergibt; und
wobei der Schritt des allmählichen Drückens nach dem Push-Prinzip (38) das allmähliche Drücken der transcodierten, nach dem Pull-Prinzip gezogenen Segmentdateien nach dem Push-Prinzip umfasst, wenn diese verfügbar werden.

7. Verfahren nach einem der vorstehenden Ansprüche, wobei das Timing einer Segmentdatei eine Zeitreferenz umfasst, die bestimmt, wann die Segmentdatei verfügbar wird.

8. Verfahren nach einem der vorstehenden Ansprüche, wobei die Metadaten in dem Schritt des Empfangens (30) von Metadaten eine Dateizustellungsregel umfassen, die einer Datendatei entspricht, welche von gestreamten Medien der Live-Inhalte getrennt ist; und wobei das Verfahren ferner die folgenden Schritte umfasst:
Ziehen (40) einer Datendatei nach dem Pull-Prinzip, auf die in der Dateizustellungsregel Bezug genommen wird; und
Drücken (42) der Datendatei nach dem Push-Prinzip zu dem mindestens einen Client-Gerät.

9. Verfahren nach Anspruch 8, wenn abhängig von Anspruch 6, das ferner den folgenden Schritt umfasst:
Bestimmen (41) einer Datendateibitrate, die zum Drücken der Datendatei nach dem Push-Prinzip zu verwenden ist; und
wobei der Schritt des Auswählens (32) von nur einer oder mehreren Darstellungen das Auswählen nur einer oder mehrerer Darstellungen umfasst, die eine entsprechende Bitrate aufweisen, welche innerhalb einer angepassten Kapazität liegt, wobei die Kapazität des Trägers durch die Datendateibitrate subtrahiert wird.

10. Multimedia-Streaming-Dienstknoten (1) zum Bereitstellen von Live-Inhalten, umfassend eine Vielzahl von sequentiellen Segmentdateien für mindestens ein Client-Gerät, wobei der Multimedia-Streaming-Dienstknoten (1) umfasst:
einen Prozessor (60); und
einen Speicher (64), der Anweisungen (66) speichert, die, wenn sie vom Prozessor ausgeführt werden, den Multimedia-Streaming-Dienstknoten (1) zu Folgendem veranlassen:
Empfangen von Metadaten für die Live-Inhalte, wobei die Metadaten Verweise auf mindestens eine Darstellung (100a-c) der Live-Inhalte umfassen, wobei jede Darstellung (100a-c) einer Bitrate entspricht und das Timing mindestens einer der Segmentdateien definiert;
Erzeugen, basierend auf den Metadaten, einer Planung, die definiert, wann mindestens eine der Segmentdateien zu erhalten ist;
Ziehen von Segmentdateien aus einer Inhaltsquelle nach dem Pull-Prinzip in Übereinstimmung mit der Planung; und
allmähliches Drücken der nach dem Pull-Prinzip gezogenen Segmentdateien nach dem Push-Prinzip über einen Träger zu dem mindestens einen Client-Gerät, wenn die Segmentdateien nach dem Pull-Prinzip zu dem Multimedia-Streaming-Dienstknoten (1) gezogen werden.

11. Multimedia-Streaming-Dienstknoten (1) nach Anspruch 10, wobei die Anweisungen zum allmählichen Drücken der Segmentdateien nach dem Push-Prinzip Anweisungen umfassen, die, wenn sie durch den Prozessor ausgeführt werden, den Multimedia-Streaming-Dienstknoten (1) veranlassen, die Segmentdateien über ein unidirektionales Zustellungsprotokoll nach dem Push-Prinzip zu drücken.

12. Multimedia-Streaming-Dienstknoten (1) nach Anspruch 11, wobei das unidirektionale Zustellungsprotokoll der Dateizustellung über unidirektionalen Transport, FLUTE, Version 2 oder später, entspricht.

13. Multimedia-Streaming-Dienstknoten (1) nach einem der Ansprüche 10 bis 12, wobei die Anweisungen zum Ziehen der Segmentdateien nach dem Pull-Prinzip Anweisungen umfassen, die, wenn sie durch den Prozessor ausgeführt werden, den Multimedia-Streaming-Dienstknoten (1) veranlassen, die Segmentdateien über Hypertext Transfer Protocol, HTTP, oder File Transfer Protocol, FTP, anzufordern.

14. Multimedia-Streaming-Dienstknoten (1) nach einem der Ansprüche 10 bis 13, ferner umfassend Anweisungen, die, wenn sie durch den Prozessor ausgeführt werden, den Multimedia-Streaming-Dienstknoten (1) zu Folgendem veranlassen:
Bestimmen einer Kapazität des Trägers, der zum Drücken von Segmentdateien nach dem Push-Prinzip verwendet werden soll; und
Auswählen von nur einer oder mehreren Darstellungen mit einer entsprechenden Bitrate, die innerhalb der Kapazität des Trägers liegt;
und wobei die Anweisungen zum Ziehen von Segmentdateien nach dem Pull-Prinzip Anweisungen umfassen, die, wenn sie durch den Prozessor ausgeführt werden, den Multimedia-Streaming-Dienstknoten (1) veranlassen, nur Segmentdateien der einen oder mehreren ausgewählten Darstellungen nach dem Pull-Prinzip zu ziehen.

15. Multimedia-Streaming-Dienstknoten (1) nach einem der Ansprüche 10 bis 14, ferner umfassend Anweisungen, die, wenn sie durch den Prozessor ausgeführt werden, den Multimedia-Streaming-Dienstknoten (1) zu Folgendem veranlassen:
Bestimmen einer Kapazität des Trägers, der zum Drücken von Segmentdateien nach dem Push-Prinzip verwendet werden soll;
Bestimmen einer Transcodierungsbitrate, die innerhalb der Kapazität des Trägers liegt; und
allmähliches Transcodieren der nach dem Pull-Prinzip gezogenen Segmentdateien gemäß der Transcodierungsbitrate, wenn die Segmentdateien zu dem Multimedia-Streaming-Dienstknoten (1) nach dem Pull-Prinzip gezogen werden, was transcodierte, nach dem Pull-Prinzip gezogene Segmentdateien ergibt; und
wobei die Anweisungen zum allmählichen Drücken nach dem Push-Prinzip Anweisungen umfassen, die, wenn sie durch den Prozessor ausgeführt werden, den Multimedia-Streaming-Dienstknoten (1) veranlassen, die transcodierten nach dem Pull-Prinzip gezogenen Segmentdateien nach dem Push-Prinzip zu drücken, wenn diese verfügbar werden.

16. Multimedia-Streaming-Dienstknoten (1) nach einem der Ansprüche 10 bis 15, wobei das Timing einer Segmentdatei eine Zeitreferenz umfasst, die bestimmt, wann die Segmentdatei verfügbar wird.

17. Multimedia-Streaming-Dienstknoten (1) nach einem der Ansprüche 10 bis 16, wobei die Anweisungen zum Empfangen von Metadaten Anweisungen umfassen, die, wenn sie durch den Prozessor ausgeführt werden, den Multimedia-Streaming-Dienstknoten (1) veranlassen, Metadaten, umfassend eine Dateizustellungsregel, zu empfangen, die einer Datendatei entspricht, welche von gestreamten Medien der Live-Inhalte getrennt ist; und
wobei die Anweisungen ferner Anweisungen umfassen, die, wenn sie durch den Prozessor ausgeführt werden, den Multimedia-Streaming-Dienstknoten (1) zu Folgendem veranlassen:
Ziehen einer Datendatei nach dem Pull-Prinzip, auf die in der Dateizustellungsregel Bezug genommen wird; und
Drücken der Datendatei nach dem Push-Prinzip zu dem mindestens einen Client-Gerät.

18. Multimedia-Streaming-Dienstknoten (1) nach Anspruch 17, wenn abhängig von Anspruch 15, ferner umfassend Anweisungen, die, wenn sie durch den Prozessor ausgeführt werden, den Multimedia-Streaming-Dienstknoten (1) zu Folgendem veranlassen:
Bestimmen einer Datendateibitrate, die zum Drücken der Datendatei nach dem Push-Prinzip zu verwenden ist; und
wobei die Anweisungen zum Auswählen von nur einer oder mehreren Darstellungen Anweisungen umfassen, die, wenn sie durch den Prozessor ausgeführt werden, den Multimedia-Streaming-Dienstknoten (1) dazu veranlassen, nur eine oder mehrere Darstellungen mit einer entsprechenden Bitrate auszuwählen, die innerhalb einer angepassten Kapazität des Trägers liegt, wobei die Kapazität des Trägers durch die Datendateibitrate subtrahiert wird.

19. Computerprogramm (66, 91) zum Bereitstellen von Live-Inhalten, umfassend eine Vielzahl von sequentiellen Segmentdateien für mindestens ein Client-Gerät, wobei das Computerprogramm Computerprogrammcode umfasst, der, wenn er auf einem Multimedia-Streaming-Dienstknoten (1) ausgeführt wird, den Multimedia-Streaming-Dienstknoten (1) zu Folgendem veranlasst:
Empfangen von Metadaten für die Live-Inhalte, wobei die Metadaten Verweise auf mindestens eine Darstellung (100a-c) der Live-Inhalte umfassen, wobei jede Darstellung (100a-c) einer Bitrate entspricht und das Timing mindestens einer der Segmentdateien definiert;
Erzeugen, basierend auf den Metadaten, einer Planung, die definiert, wann mindestens eine der Segmentdateien zu erhalten ist;
Ziehen von Segmentdateien aus einer Inhaltsquelle nach dem Pull-Prinzip in Übereinstimmung mit der Planung; und
allmähliches Drücken der nach dem Pull-Prinzip gezogenen Segmentdateien nach dem Push-Prinzip über einen Träger zu dem mindestens einen Client-Gerät, wenn die Segmentdateien nach dem Pull-Prinzip zu dem Multimedia-Streaming-Dienstknoten (1) gezogen werden.

20. Computerprogrammprodukt (66, 90) umfassend ein Computerprogramm nach Anspruch 19 und ein computerlesbares Mittel, auf dem das Computerprogramm gespeichert ist.

## Revendications

1. Procédé pour fournir un contenu en direct comprenant une pluralité de fichiers de segment séquentiels à au moins un dispositif client (2), le procédé étant mis en oeuvre dans un noeud de service de diffusion multimédia en continu (1) et comprenant les étapes consistant à :
recevoir (30) des métadonnées pour le contenu en direct, les métadonnées comprenant des références à au moins une représentation (100a-c) du contenu en direct, dans lequel chaque représentation (100a-c) correspond à un débit binaire et définit une temporisation d'au moins l'un des fichiers de segment ;
créer (34), sur la base des métadonnées, une planification définissant le moment où il faut obtenir au moins l'un des fichiers de segment ;
tirer (36) des fichiers de segment à partir d'une source de contenu conformément à la planification ; et
pousser progressivement (38) les fichiers de segment tirés sur une porteuse vers l'au moins un dispositif client, à mesure que les fichiers de segment sont tirés vers le noeud de service de diffusion multimédia en continu (1).

2. Procédé selon la revendication 1, dans lequel l'étape consistant à pousser progressivement (38) les fichiers de segment comprend le fait de pousser les fichiers de segment sur un protocole de distribution unidirectionnel.

3. Procédé selon la revendication 2, dans lequel le protocole de distribution unidirectionnel respecte la distribution de fichier sur transport unidirectionnel, FLUTE, version 2 ou ultérieure.

4. Procédé selon l'une quelconque des revendications précédentes, dans lequel l'étape consistant à tirer (36) les fichiers de segment comprend la demande des fichiers de segment sur un protocole de transfert hypertexte, HTTP ou un protocole de transfert de fichiers, FTP.

5. Procédé selon l'une quelconque des revendications précédentes, comprenant en outre les étapes consistant à :
déterminer (31) une capacité de la porteuse à utiliser pour pousser des fichiers de segment ; et
sélectionner (32) uniquement une ou plusieurs représentations ayant un débit binaire correspondant étant dans les limites de la capacité de la porteuse ;
et dans lequel l'étape consistant à tirer (36) des fichiers de segment comprend le fait de tirer uniquement des fichiers de segment de la ou des représentations sélectionnées.

6. Procédé selon l'une quelconque des revendications précédentes, comprenant en outre les étapes consistant à :
déterminer (31) une capacité de la porteuse à utiliser pour pousser des fichiers
de segment ;
déterminer (33) un débit binaire de transcodage étant dans les limites de la capacité de la
porteuse ; et
transcoder progressivement (37) les fichiers de segment tirés conformément au débit binaire de transcodage à mesure que les fichiers de segment sont tirés vers le noeud de service de diffusion multimédia en continu (1), donnant des fichiers de segment tirés transcodés ; et
dans lequel l'étape consistant à pousser progressivement (38) comprend le fait de pousser progressivement les fichiers de segment tirés transcodés à mesure que ceux-ci deviennent disponibles.

7. Procédé selon l'une quelconque des revendications précédentes, dans lequel la temporisation d'un fichier de segment comprend une référence de temps déterminant quand le fichier de segment deviendra disponible.

8. Procédé selon l'une quelconque des revendications précédentes, dans lequel dans l'étape de réception (30) de métadonnées, les métadonnées comprennent une règle de distribution de fichier correspondant à un fichier de données étant indépendant du média diffusé en continu du contenu en direct ; et
dans lequel le procédé comprend en outre les étapes consistant à :
tirer (40) un fichier de données auquel il est fait référence dans la règle de distribution de fichier ; et
pousser (42) le fichier de données vers l'au moins un dispositif client.

9. Procédé selon la revendication 8 prise en dépendance de la revendication 6, comprenant en outre l'étape consistant à :
déterminer (41) un débit binaire de fichier de données à utiliser pour pousser le fichier de données ; et
dans lequel l'étape de sélection (32) uniquement d'une ou plusieurs représentations comprend la sélection uniquement d'une ou plusieurs représentations ayant un débit binaire correspondant dans les limites d'une capacité ajustée, étant la capacité de la porteuse soustraite par le débit binaire de fichier de données.

10. Noeud de service de diffusion multimédia en continu (1) pour fournir un contenu en direct comprenant une pluralité de fichiers de segment séquentiels à au moins un dispositif client, le noeud de service de diffusion multimédia en continu (1) comprenant :
un processeur (60) ; et
une mémoire (64) stockant des instructions (66) qui, lorsqu'elles sont exécutées par le processeur, amènent le noeud de service de diffusion multimédia en continu (1) à :
recevoir des métadonnées pour le contenu en direct, les métadonnées comprenant des références à au moins une représentation (100a-c) du contenu en direct, dans lequel chaque représentation (100a-c) correspond à un débit binaire et définit une temporisation d'au moins l'un des fichiers de segment ;
créer, sur la base des métadonnées, une planification définissant le moment où il faut obtenir au moins l'un des fichiers de segment ;
tirer des fichiers de segment à partir d'une source de contenu conformément à la planification ; et
pousser progressivement les fichiers de segment tirés sur une porteuse vers l'au moins un dispositif client, à mesure que les fichiers de segment sont tirés vers le noeud de service de diffusion multimédia en continu (1).

11. Noeud de service de diffusion multimédia en continu (1) selon la revendication 10, dans lequel les instructions pour pousser progressivement les fichiers de segment comprennent des instructions qui, lorsqu'elles sont exécutées par le processeur, amènent le noeud de service de diffusion multimédia en continu (1) à pousser les fichiers de segment sur un protocole de distribution unidirectionnel.

12. Noeud de service de diffusion multimédia en continu (1) selon la revendication 11, dans lequel le protocole de distribution unidirectionnel respecte la distribution de fichier sur transport unidirectionnel, FLUTE, version 2 ou ultérieure.

13. Noeud de service de diffusion multimédia en continu (1) selon l'une quelconque des revendications 10 à 12, dans lequel les instructions pour tirer les fichiers de segment comprennent des instructions qui, lorsqu'elles sont exécutées par le processeur, amènent le noeud de service de diffusion multimédia en continu (1) à demander les fichiers de segment sur un protocole de transfert hypertexte, HTTP ou un protocole de transfert de fichiers, FTP.

14. Noeud de service de diffusion multimédia en continu (1) selon l'une quelconque des revendications 10 à 13, comprenant en outre des instructions qui, lorsqu'elles sont exécutées par le processeur, amènent le noeud de service de diffusion multimédia en continu (1) à :
déterminer une capacité de la porteuse à utiliser pour pousser des fichiers de segment ; et
sélectionner uniquement une ou plusieurs représentations ayant un débit binaire correspondant étant dans les limites de la capacité de la porteuse ;
et dans lequel les instructions pour tirer des fichiers de segment comprennent des instructions qui, lorsqu'elles sont exécutées par le processeur, amènent le noeud de service de diffusion multimédia en continu (1) à tirer uniquement des fichiers de segment de la ou des représentations sélectionnées.

15. Noeud de service de diffusion multimédia en continu (1) selon l'une quelconque des revendications 10 à 14, comprenant en outre des instructions qui, lorsqu'elles sont exécutées par le processeur, amènent le noeud de service de diffusion multimédia en continu (1) à :
déterminer une capacité de la porteuse à utiliser pour pousser des fichiers de segment ; déterminer un débit binaire de transcodage dans la capacité de la porteuse ; et transcoder progressivement les fichiers de segment tirés conformément au débit binaire de transcodage à mesure que les fichiers de segment sont tirés vers le noeud de service de diffusion multimédia en continu (1), donnant des fichiers de segment tirés transcodés ; et
dans lequel les instructions pour pousser progressivement comprennent des instructions qui, lorsqu'elles sont exécutées par le processeur, amènent le noeud de service de diffusion multimédia en continu (1) à pousser progressivement les fichiers de segment tirés transcodés à mesure que ceux-ci deviennent disponibles.

16. Noeud de service de diffusion multimédia en continu (1) selon l'une quelconque des revendications 10 à 15, dans lequel la temporisation d'un fichier de segment comprend une référence de temps déterminant quand le fichier de segment deviendra disponible.

17. Noeud de service de diffusion multimédia en continu (1) selon l'une quelconque des revendications 10 à 16, dans lequel les instructions pour recevoir des métadonnées comprennent des instructions qui, lorsqu'elles sont exécutées par le processeur, amènent le noeud de service de diffusion multimédia en continu (1) à recevoir des métadonnées comprenant une règle de distribution de fichier correspondant à un fichier de données étant indépendant du média diffusé en continu du contenu en direct ; et
dans lequel les instructions comprennent en outre des instructions qui, lorsqu'elles sont exécutées par le processeur, amènent le noeud de service de diffusion multimédia en continu (1) à :
tirer un fichier de données auquel il est fait référence dans la règle de distribution de fichier ; et
pousser le fichier de données vers l'au moins un dispositif client.

18. Noeud de service de diffusion multimédia en continu (1) selon la revendication 17 prise en dépendance de la revendication 15, comprenant en outre des instructions qui, lorsqu'elles sont exécutées par le processeur, amènent le noeud de service de diffusion multimédia en continu (1) à :
déterminer un débit binaire de fichier de données à utiliser pour pousser le fichier de données ; et
dans lequel les instructions pour sélectionner uniquement une ou plusieurs représentations comprennent des instructions qui, lorsqu'elles sont exécutées par le processeur, amènent le noeud de service de diffusion multimédia en continu (1) à sélectionner uniquement une ou plusieurs représentations ayant un débit binaire correspondant étant dans les limites d'une capacité ajustée, étant la capacité de la porteuse soustraite par le débit binaire de fichier de données.

19. Programme informatique (66, 91) pour fournir un contenu en direct comprenant une pluralité de fichiers de segment séquentiels à au moins un dispositif client, le programme informatique comprenant un code de programme informatique qui, lorsqu'il est exécuté sur un noeud de service de diffusion multimédia en continu (1) amène le noeud de service de diffusion multimédia en continu (1) à :
recevoir des métadonnées pour le contenu en direct, les métadonnées comprenant des références à au moins une représentation (100a-c) du contenu en direct, dans lequel chaque représentation (100a-c) correspond à un débit binaire et définit une temporisation d'au moins l'un des fichiers de segment ;
créer, sur la base des métadonnées, une planification définissant le moment où il faut obtenir au moins l'un des fichiers de segment ;
tirer des fichiers de segment à partir d'une source de contenu conformément à la planification ;
et
pousser progressivement les fichiers de segment tirés sur une porteuse vers l'au moins un dispositif client, à mesure que les fichiers de segment sont tirés vers le noeud de service de diffusion multimédia en continu (1).

20. Produit programme informatique (66, 90) comprenant un programme informatique selon la revendication 19 et un moyen lisible par un ordinateur sur lequel le programme d'ordinateur est stocké.
